(19) Europäisches Patentamt
European Patent Office
Office européen des brevets

(11) **EP 2 863 687 A1**

(12) **EUROPEAN PATENT APPLICATION**
published in accordance with Art. 153(4) EPC

(43) Date of publication:
**22.04.2015 Bulletin 2015/17**

(51) Int Cl.:
**H04W 52/04** (2009.01)

(21) Application number: **13829281.8**

(86) International application number:
**PCT/CN2013/079094**

(22) Date of filing: **09.07.2013**

(87) International publication number:
**WO 2014/026517 (20.02.2014 Gazette 2014/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.08.2012 CN 201210286582**

(71) Applicant: **ZTE Corporation**
**Shenzhen, Guangdong 518057 (CN)**

(72) Inventor: **GUO, Shengxiang**
**Shenzhen**
**Guangdong 518057 (CN)**

(74) Representative: **Jansen, Cornelis Marinus et al**
**V.O.**
**Johan de Wittlaan 7**
**2517 JR Den Haag (NL)**

(54) **POWER CONTROL METHOD AND BASE STATION THEREOF**

(57) A power control method and a base station thereof are provided, in which the method includes that a base station determines a minimum power enhancement value of a cellular user according to the signal quality which is respectively reported from a D2D user and the cellular user, in which the minimum power enhancement value is obtained according to the principle that the communication signal quality of the cellular user and the communication signal quality of the D2D user are both higher than preset signal quality; the base station controls the power of the cellular users according to the minimum enhancement value when the base station determines that the minimum power enhancement value is smaller than the PH value. The implementation of the disclosure solves the problem that D2D will interfere with a base station and then affect the normal communication of cellular users when the D2D shares the cellular mobile upstream resources in a cellular mobile network with a D2D communication.

Fig.1

A base station determines a minimum power enhancement value of a cellular user according to the signal quality which is respectively reported from a D2D user and the cellular user — S102

The base station judges if the minimum power enhancement value is smaller than a power headroom PH value which is reported from the cellular user — S104

The base station controls the power of the cellular user according to the minimum power enhancement value — S106

## Description

### TECHNICAL FIELD

The disclosure relates to the field of communications, and particularly to a power control method and base station.

### BACKGROUND

A Device-to-Device (D2D) communications is a new technology that, in the charge of a cellular system, allows terminals to communicate with each other directly by reusing resources in a cell, which has the advantages including improvement of the spectrum efficiency of the system, reduction of the battery consumption of terminals which leads to saving of the power of mobile stations, reduction of the load of the base stations of cells, improvement of the fairness of system users, enhancement of the quality of network services, consolidation of the basis, and providing of new services, and so on. The D2D communication can avoid lack of spectrum resources of a wireless communication system to some extent. The D2D communication is implemented in permissive frequency bands in a cellular network, which has a plurality of advantages compared with other technologies (such as Bluetooth, WLAN, and etc.) that are applied in non permissive frequency bands. Compared with the non permissive frequency bands which provides unstable services, only the permissive bands can ensure to provide a stable communication circumstance in which the interference is controllable, which is very important for services or specific users that require high service quality.

The D2D communication achieves the improvement of the overall performance of the system by sharing cell resources under a cellular network architecture. If orthogonal channel resources are assigned to the D2D communication, the D2D communication will not interfere with previous communication in the cellular network. If non orthogonal channel resources are assigned to the D2D communication, the D2D communication will interfere with a receiving end in cellular links, and even lead to a communication outage. For example, the D2D communication will interfere with a base station when sharing the cellular mobile upstream resources, while the D2D communication will interfere with adjacent UE when shares the downstream resources of the cellular mobile. For the case of sharing cellular mobile upstream resources, the reduction of D2D transmit power generally may reduce the interference, but may affect the D2D communication as well and even may lead to D2D communication outrage in a bad situation, thereby lowing the service quality.

### SUMMARY

The embodiments of the disclosure provide a power control method and a base station thereof, and solve the problem that in a cellular mobile network involving a D2D communication, when D2D share cellular mobile upstream resources, the D2D will interfere with a base station and thus affect the normal communications of cellular users.

According to an aspect of the embodiments of the disclosure, a power control method is provided, which includes that a base station determines a minimum power enhancement value according to signal quality reported from a D2D user and signal quality reported from a cellular user; the base station judges whether the minimum power enhancement value is smaller than a PH (power headroom) value which is reported from the cellular user; the base station controls the power of the cellular user according to the minimum power enhancement value if the minimum power enhancement value is smaller than the PH value which is reported from the cellular user.

In an embodiment, after determining that the minimum power enhancement value is smaller than the PH value which is reported from the cellular user, the method further may include that a power back-off value of the D2D user is determined according to the minimum power enhancement value; the base station controls the power of the D2D user according to the power back-off value.

In an embodiment, after judging whether the minimum power enhancement value is smaller than the PH value which is reported from the cellular user, the method further may include that the D2D user is switched to become a cellular user if the minimum power enhancement value is not smaller than the PH value which is reported from the cellular user.

In an embodiment, the step of a base station determining a minimum power enhancement value according to signal quality reported from a D2D user and signal quality reported from a cellular user may include that the base station calculates the minimum power enhancement value according to a principle that the current signal quality reported from the D2D user and the current signal quality reported from the cellular user are both higher than or equal to preset signal quality.

In an embodiment, before the step of a base station determining a minimum power enhancement value according to signal quality reported from a D2D user and signal quality reported from a cellular user, the method further may include that the base station detects whether the signal quality which is reported from the cellular user is lower than the preset signal quality, and receives the signal quality which is reported from the D2D user if the signal quality which is reported from the cellular user is lower than the preset signal quality.

In an embodiment, the signal quality may include at least one of the following information: SINR (Signal to Interference plus Noise Ratio), error rate, BLER (Block Error Rate), and HARQ (Hybrid Automatic Repeat Request) feedback information.

According to another aspect of the embodiments of the disclosure, a base station is provided, which includes: a first determination module, configured to determine a minimum power enhancement value according to signal quality reported from a D2D user and signal quality reported from a cellular user; a judgment module, configured to judge whether the minimum power enhancement value is smaller than a power headroom PH value which is reported from the cellular user; a first control module, configured to control the power of the cellular user according to the minimum power enhancement value when the minimum power enhancement value is smaller than a PH value which is reported from the cellular user.

In an embodiment, the base station also may include: a second determination module, configured to determine a power back-off value according to the minimum power enhancement value when the minimum power enhancement value is smaller than the PH value which is reported from the cellular user; a second control module, configured to enable the base station to control the power of the D2D user according to the power back-off value.

In an embodiment, the first determination module determines the minimum power enhancement value in the manner of calculating the minimum power enhancement value according to a principle that the current signal quality reported from the D2D user and the current signal quality reported from the cellular user are both higher than or equal to preset signal quality.

In an embodiment, the base station also may include: a detection module, configured to detect whether the signal quality which is reported from the cellular user is lower than the preset signal quality; and a receiving module, configured to receive the signal quality which is reported from the D2D user when the signal quality which is reported from the cellular user is lower than the preset signal quality.

The embodiments of the disclosure take use of the method as follows: a base station determines a minimum power enhancement value of a cellular user according to the signal quality reported from a D2D user and the signal quality reported from the cellular user, adjusts the power of the cellular user according to the minimum power enhancement value, so as to control the communication quality of the cellular user by adjusting the minimum power enhancement value, and solves the problem that D2D will interfere with the base station and affect the normal communication of the cellular user in a cellular mobile network with the D2D communication when the D2D shares cellular mobile upstream resources, thus improving the communication quality of the cellular user and the throughput of the overall system.

## BRIEF DESCRIPTION OF THE DRAWINGS

Fig.1 is a flow chart of a power control method according to an embodiment of the disclosure;

Fig.2 is structure diagram 1 of a base station according to an embodiment of the disclosure;

Fig.3 is structure diagram 2 of a base station according to an embodiment of the disclosure;

Fig.4 is structure diagram 3 of a base station according to an embodiment of the disclosure;

Fig.5 is a schematic view in which D2D users shares cellular user resources according to an embodiment of the disclosure;

Fig.6 is a flow chart of a power control method according to embodiment 1 of the disclosure; and

Fig.7 is a flow chart of a power control method according to embodiment 2 of the disclosure.

## DETAILED DESCRIPTION

The disclosure will be illustrated below in detail by reference to accompanied drawings and in combination with embodiments. It should be noted that the embodiments and the features thereof in the disclosure may be combined in the case of no conflict.

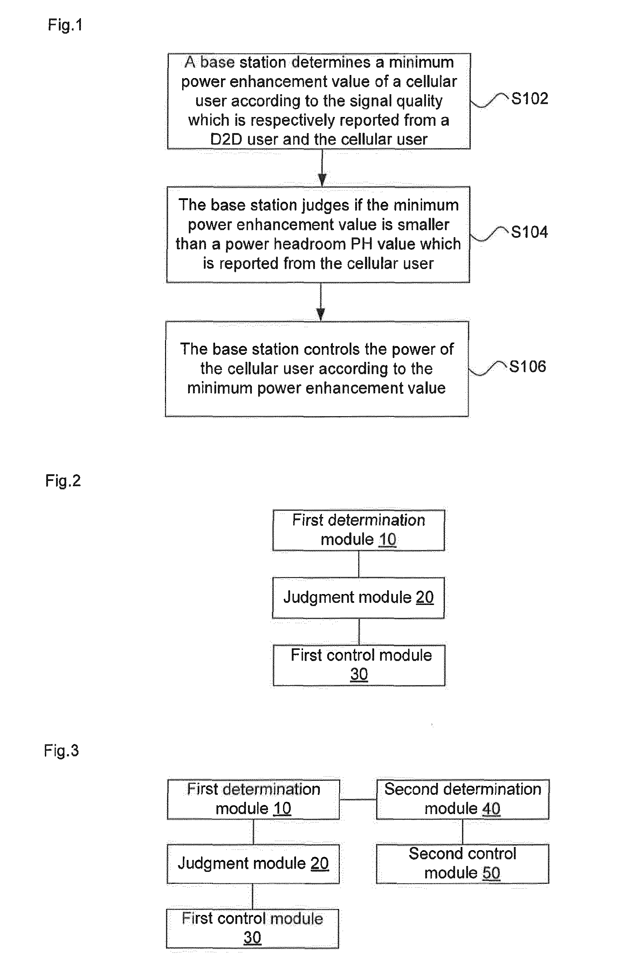

Based on relevant technologies, in a cellular mobile network with a D2D communication, when D2D shares cellular mobile upstream resources, the D2D will interfere with a base station and thus affect normal communications among cellular users. An embodiment of the disclosure provides a power control method, as shown in Fig.1, which includes steps from S102 to S106:

S102: a base station determines the minimum power enhancement value of a cellular user according to the signal quality reported from a D2D user and the signal quality reported from the cellular user, wherein the minimum power enhancement value is obtained according to the principle of ensuring the communication signal quality of the cellular user and the communication signal quality of the D2D user are all higher than preset signal quality;

S104: the base station judges if the minimum power enhancement value is smaller than a power headroom PH value which is reported from the cellular user; and

S106: the base station controls the power of the cellular user according to the minimum power enhancement value.

The embodiment of the disclosure takes use of the method as follows: a base station determines a minimum power enhancement value of a cellular user according to the signal quality which is reported from a D2D user and the cellular user, adjusts the power of the cellular user according to the minimum power enhancement value so as to control the communication quality of the cellular user by adjusting the minimum power enhancement value, and solves the problem in a cellular mobile network with a D2D communication that the D2D communication may interfere with the base station and affect the normal communication of the cellular user when the D2D communication shares the cellular mobile upstream resources, thus improving the communication quality of the cellular user and the throughput of the overall system.

Before the base station determines the minimum power enhancement value according to the signal quality reported from the D2D user and the cellular user, it may also detect if the signal quality which is currently reported from the cellular user is lower than preset signal quality; if lower, that is to say that the communication quality of the cellular user is poor or the communication fails, thus it is necessary to receive the signal quality which is reported from the D2D user and perform step S102 according to the obtained signal quality.

In the implementation of S102, the base station may calculate the minimum power enhancement value according to the principle that the current signal quality reported from the D2D user and the current signal quality reported from the cellular user are all higher than or equal to the preset signal quality. In this case, the signal quality may include various kinds of information, for example, minimum SINR, error rate, BLER, HARQ feedback information and so on, which all may be regarded as quality information and may be calculated from different formulas in actual situations.

After the minimum power enhancement value of the cellular user is determined, it is judged if the minimum power enhancement value is smaller than the PH value which is reported from the cellular user. If the minimum power enhancement value is smaller than the PH value which is reported from the cellular user, the base station may control the power of the cellular user according to the minimum power enhancement value and may increase the power of the cellular user in a permissible range to control the communication quality of the cellular user.

In the case of determining that the minimum power enhancement value is smaller than the PH value which is reported from the cellular user, a power back-off value of the D2D user may be determined according to the minimum power enhancement value. After the power back-off value is determined, the power of the D2D user is adjusted according to the power back-off value. In this way, the interference of the D2D user with the cellular user is reduced to some extent, and the power back-off value which is calculated based on the minimum power enhancement value is much smaller than the back-off value in the prior art, that is, the present power back-off value in the D2D communication is smaller which further enhances the communication quality of the cellular user without a great reduction in power of the D2D user.

In above process, the adjustable range may be determined by determining the relation between the minimum power enhancement value and the PH value, so as to make the power adjustments for the cellular user and the D2D user more accurate.

If the minimum power enhancement value is not smaller than the PH value, the D2D user is directly switched to a cellular user, thereby ensuring that the D2D user can keep in communication when D2D communication cannot be achieved.

The application of the embodiment described above reduces the negative effects such as the increased probability of communication failure among D2D users that is brought from reduction of communication quality of the D2D users only, and the need for D2D users to frequently switch to the cellular communication, thus improving the overall spectrum efficiency of the system.

An embodiment of the disclosure further provides a base station, that is capable of implementing the power control method described above and the structure of which is as shown in Fig.2, which includes: a first determination module 10, configured to determine a minimum power enhancement value of a cellular user according to the signal quality which is reported from a D2D user and the signal quality which is reported from the cellular user, in which the minimum power enhancement value is obtained according to the principle of ensuring the respective communication signal quality of the cellular user and the D2D user to be higher than preset signal quality; a judgment module 20 coupled with the first determination module 10, configured to judge whether the minimum power enhancement value is smaller than the PH value which is reported by the cellular user; a first control module 30 coupled with the judgment module 20, configured to control the power of the cellular user according to the minimum power enhancement value in the case that the minimum power enhancement value is smaller than the PH value which is reported by the cellular user.

In the implementation, the first determination module 10 further determines the minimum power enhancement value in a manner as follows: calculating the minimum power enhancement value according to the principle that the current signal quality reported from the D2D user and the current signal quality reported from the cellular user are higher than or equal to preset signal quality.

In an embodiment, the above base station, as shown in Fig.3, may further include a second determination module 40 and a second control module 50, in which the second determination module 40 coupled with the first determination module 10 is configured to determine a power back-off value of the D2D user according to the minimum power enhancement value in the case that the minimum power enhancement value is smaller than the PH value which is reported from the cellular user; the second control module 50 coupled with the second determination module 40 is configured to make the base station to control the power of the D2D user according to the power back-off value.

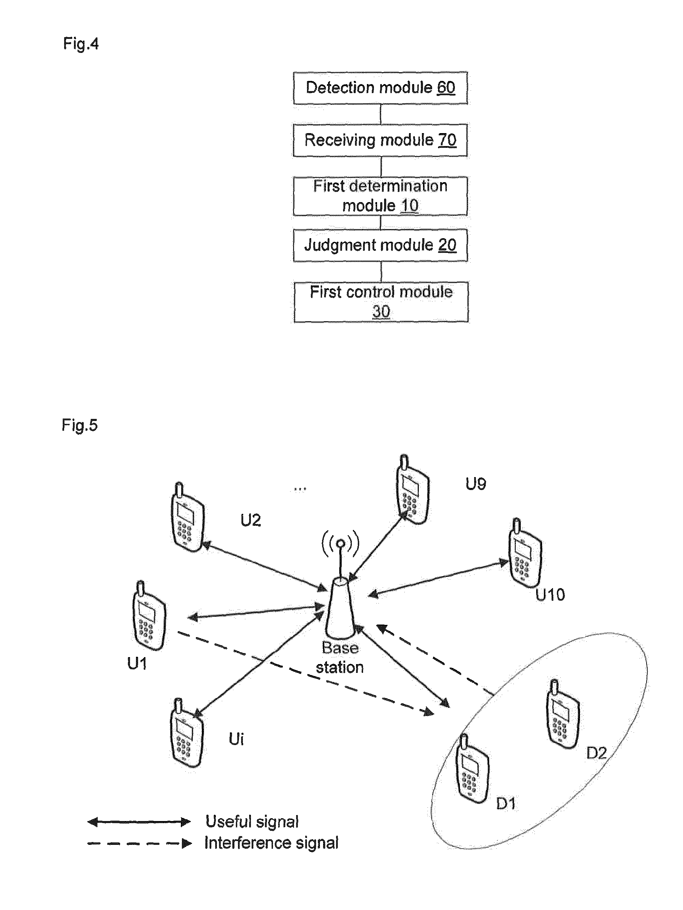

Another embodiment of the disclosure is shown in Fig.4, which includes a detection module 60 configured to detect whether the signal quality which is reported from the cellular user is lower than the preset signal quality, and a receiving module 70 couple with the first determination module 10, configured to receive the signal quality reported by the D2D user in the case that the signal quality which is reported from the cellular user is lower than the preset signal quality.

In the implementation, a module may also be included, which is configured to switch the D2D user to become a cellular user in the case that the minimum power enhancement value is not smaller than the PH value which is reported from the cellular user.

The implementations described above will be illustrated below in combination with the following embodiment.

EMBODIMENT

In this embodiment, when the preset lowest SINR at the cellular (here it is the base station) side of shared upstream resources is set to be $SINR_{C0}$, that is, when the signal received by the base station at the shared resources is higher than $SINR_{C0}$, it is considered that the normal communication is not affected. On the contrary, when the preset lowest SINR at the D2D side of the shared upstream resources is $SINR_{D0}$, that is, the signal received by the D2D side at the shared resources is higher than $SINR_{D0}$, it is considered that the normal communication is not affected. The embodiment uses SINR to indicate the signal quality, but is not limited to it. HARQ feedback information, BLER and the like may also be the criterion of evaluating the signal quality.

Fig.5 shows a cellular mobile communication network including D2D users, in which the D2D users share the upstream resources of cellular users.

When a base station detects at the shared resources that the SINR exceeds the limit, i.e., exceeds the preset $SINR_{C0}$, the base station requires the D2D users and the cellular users to report. In this case, what the D2D users may report current SINR, preset $SINR_{D0}$, and the like, while the cellular users may report PH values.

The base station calculates a minimum power enhancement value based on the contents which are reported from the D2D users and the cellular users and according to the principle of ensuring the SINR of the cellular users and the SINR of the D2D communication are both higher than the preset SINR. This process may include estimating a minimum power enhancement value of one cellular user and then judging whether the power enhancement value is smaller than the PH value which is reported from the cellular user when an inequation is satisfied.

If the result of the judgment indicates that the inequation is satisfied, then the power back-off value of D2D in this condition is calculated according to the minimum power enhancement value. The base station controls the power back-off of the D2D user and the power enhancement of the cellular user via a power control protocol. In implementation, the power back-off of the D2D user occurs, and the power of the cellular user is enhanced. A little enhancement in power of the cellular user thus may reduce the power back-off value of the D2D to a great extent, that is, a little increase in power of the cellular user will improve the effect of current SINR of the cellular user to a great extent, thus a slight back-off in power of the D2D user will further improve the communication quality.

If the result of the judgment indicates that the inequation is not satisfied, then the D2D communication is cancelled and the D2D user switches to a cellular communication and becomes a cellular user.

The implementations described above will be illustrated below in combination with drawings and embodiments.

Embodiment 1

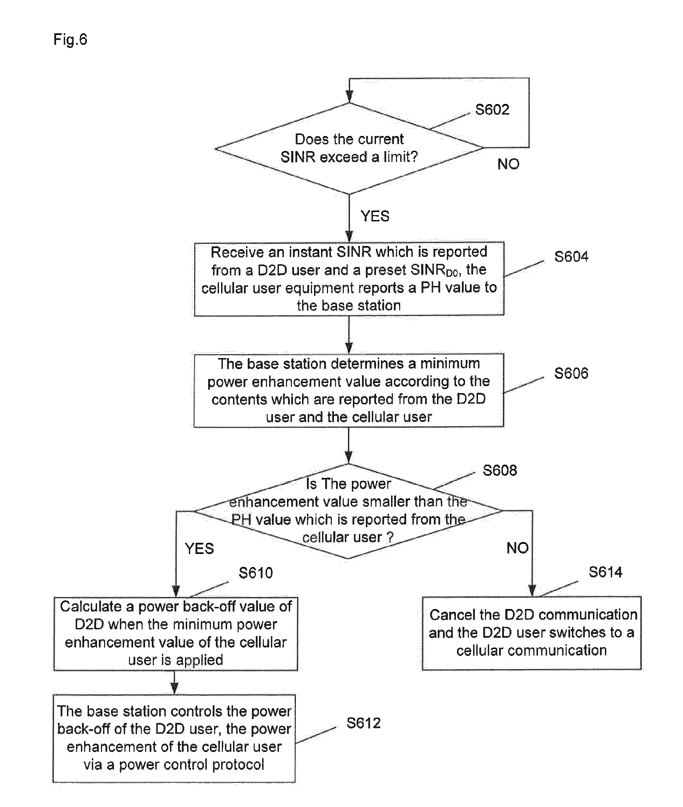

Fig.6 shows the process for power control according to an embodiment, which includes steps from S602 to S614:

S602, a base station detects whether the current SINR of a cellular user sharing resources exceeds a limit; S604 is executed if the current SINR of the cellular user sharing resources exceeds the limit, or else S602 is repeated;

S604, an instant SINR which is reported from a D2D user and a preset $SINR_{D0}$ are received, the user equipment of the cellular user equipment reports a PH value to the base station;

S606, the base station determines a minimum power enhancement value according to the contents which are reported from the D2D user and the cellular user, wherein the minimum power enhancement value is calculated based on the principle of ensuring the SINR of the cellular user and the SINR of the D2D communication are both higher than the preset SINR;

S608, it is judged whether the power enhancement value is smaller than the PH value which is reported from the cellular user; S610 is executed if the power enhancement value is smaller than the PH value which is reported from the cellular user, or else S614 is executed;

S610, a power back-off value of D2D is calculated when the minimum power enhancement value of the cellular user is applied;

S612, the base station controls the power back-off of the D2D user, the power enhancement of the cellular user via a power control protocol;

during the adjustment in an actual power control, on the premise of satisfying the principle that both the SINRs are higher than the preset SINR in communication in S606, the power enhancement value of UE (user equipment) and the power back-off value of D2D are adapted to the power control step of UE and D2D user in the protocol; and

S614, the D2D communication is cancelled and the D2D user switches to a cellular communication.

In comparison to the prior art, the embodiment described above takes the mutual effect between the communication quality of cellular users and the communication quality of D2D users in consideration, which tries to reach a balance between the communication service quality of the D2D users and the communication service quality of the cellular users without affecting their respective communications, thus reducing the negative effects such as increased probability of communication failure among D2D users which is brought from reduction in communication service quality of the D2D users only, and the need of D2D users to frequently switch to a cellular communication, therefore improving the overall spectrum efficiency of a system.

Embodiment 2

For understanding the disclosure, this embodiment takes the D2D communication in an LTE-A system as an example to illustrate the D2D power control method of the embodiment. Firstly, the system is assumed to have a bandwidth of 10MHz and work at 2GHz. It is assumed that the system has 10 cellular users, which are respectively U1, U2,...,U10, and a pair of D2D users (D1, D2), wherein the D2D users share the upstream resources of U1, as shown in Fig.5.

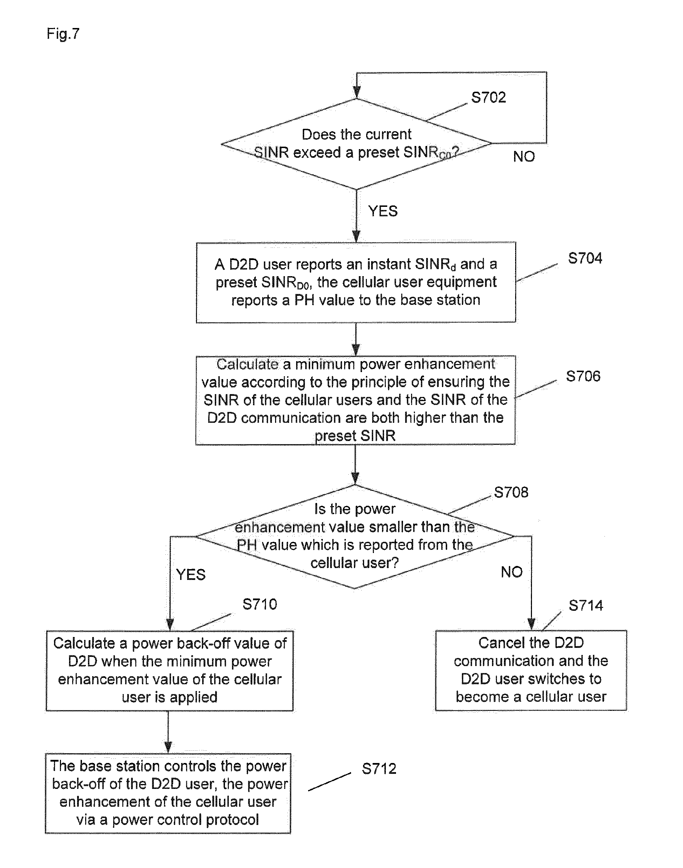

When the base station detects that the current SINR of the cellular users which share resources exceeds a limit, i.e., exceeds the preset $SINR_{C0}$ of U1, the base station initiates a D2D power control, which is as shown in Fig.7 and includes steps from S702 to S714:

S702: the base station detects whether the current SINR of a cellular user exceeds a preset $SINR_{C0}$; S704 is executed if the current SINR of the cellular user exceeds the limit, or else S702 is repeated; S704, a D2D user reports an instant $SINR_d$ and a preset $SINR_{D0}$ to the base station, and the user equipment of the cellular user reports a PH value to the base station; S706: the base station calculates a minimum power enhancement value based on the contents which are reported from the D2D users and the cellular users and according to the principle of ensuring the SINR of the cellular users and the SINR of the D2D communication are both higher than the preset SINR; an embodiment for the calculation process is given below:

the calculation model of SINR of U1 at the base station side is:

$$SINR_{u1} = \frac{P_{u1} C_{u1} a}{P_d C_d / b + \delta_{u1}^2}$$ (Formula 1)

the calculation model of SINR of D is:

$$SINR_d = \frac{(P_d / b) C_d}{P_{u1} C_{ud} a + \delta_d^2}$$ (Formula 2)

where $P_{u1}$ and $P_d$ respectively denote the transmit power of the U1 and D2D users; $C_{u1}$, $C_d$ and $C_{ud}$ respectively denote an instantly measured path loss value between U1 user and the base station, an instantly measured path loss value between the D2D users, and an instantly measured path loss value between D2D users and U1 user, where the pass loss values include the effects of short-term fading and long-term fading of the channel; and $\delta_{u1}$ and $\delta_d$ respectively denote the noise at the BS (base station) side and the D2D user side; a denotes the power enhancement value of the U1, b denotes the power back-off value of the D2D user;

based on the formulas 1 and 2, the minimum power enhancement value $a_{min}$ is calculated based on the principle of ensuring the SINR of the cellular user and the SINR of the D2D communication are both higher than the preset SINR, that is, $SINR_{u1} \geq SINR_{C0}$, $SINR_d \geq SINR_{d0}$;

S708, it is judged whether the power enhancement value $a_{min}$ is smaller than the PH value which is reported from the cellular user; step S710 is executed if the power enhancement value $a_{min}$ is smaller than the PH value which is reported from the cellular user, or else S712 is executed;

S710, a power back-off value of D2D is calculated when the minimum power enhancement value of the cellular user is applied;

the UE power enhancement value and the D2D power back-off value are adjusted in an actual power control, which are required to be adapted to the power control step lengths of the UE and D2D users in the protocol on the premise of satisfying S706;

S712, the base station controls the power back-off of the D2D user, the power enhancement of the cellular user via a power control protocol; and

S714, the D2D communication is cancelled and the D2D user switches to become a cellular user.

It can be seen from the above description that the embodiments of the disclosure achieve the technical effects as follows:

the embodiments of the disclosure take use of the method as follows: a base station determines a minimum power enhancement value of the cellular user according to the signal quality reported from the D2D user and the cellular user, adjusts the power of the cellular user according to the minimum power enhancement value, so as to control the communication quality of the cellular user by adjusting the minimum power enhancement value, and solves the problem that the D2D will interfere with the base station and affect the normal communication of the cellular user when the D2D shares the cellular mobile upstream resources in a cellular mobile network with the D2D communication, thus improving the communication quality of the cellular user and the throughput of the overall system.

Apparently, those skilled in the art should understand that the modules and steps of the disclosure described above may be implemented with universal computing devices. These modules and steps may be integrated in a single computing device or distributed in a network composed of a plurality of computing devices, and optionally executed using executable programme codes of computing devices. Thus, it is possible to store them in storing devices and execute them using computing devices. Different from the steps shown or described here, steps may be executed in a different order in some conditions. They may be respectively made as integrated circuit modules, or a plurality of modules or steps of them may be made to be a single integrated circuit. In this way, the disclosure is not limited to any specific combination of hardware and software.

What have been described above are just the embodiments of the disclosure, but not used to limit the disclosure. For those skilled in the art, the disclosure may have various modifications and variations. Any modification, equivalent, improvement within the spirit and principle of the disclosure is not beyond the scope of the disclosure.

**INDUSTRIAL APPLICATION**

A power control method and base station thereof are disclosed, in which the method includes that a base station determines the minimum power enhancement value of a cellular user according to the signal quality reported from a D2D user and the signal quality reported by the cellular user; the base station controls the power of the cellular users according to the minimum enhancement value when the base station determines that the minimum power enhancement value is smaller than the PH value. The implementation of the disclosure solves the problem that the D2D will interfere with the base station and then affect the normal communication of the cellular user in a cellular mobile network with a D2D communication when the D2D shares the cellular mobile upstream resources.

**Claims**

1. A power control method, comprising:

    determining, by a base station, a minimum power enhancement value according to signal quality reported from a D2D user and signal quality reported from a cellular user;
    judging, by the base station, whether the minimum power enhancement value is smaller than a power headroom (PH) value which is reported from the cellular user; and
    controlling, by the base station, power of the cellular user according to the minimum power enhancement value when the minimum power enhancement value is smaller than the PH value which is reported from the cellular user.

2. The method according to claim 1, after determining that the minimum power enhancement value is smaller than the PH value which is reported from the cellular user, the method further comprising:

    determining a power back-off value of the D2D user according to the minimum power enhancement value; and
    controlling, by the base station, power of the D2D user according to the power back-off value.

3. The method according to claim 1, after judging whether the minimum power enhancement value is smaller than the PH value which is reported from the cellular user, the method further comprising:

    switching the D2D user to become a cellular user when the minimum power enhancement value is not smaller than the PH value which is reported from the cellular user.

4. The method according to any of claims 1 to 3, wherein the determining, by a base station, a minimum power enhancement value according to signal quality reported from a D2D user and signal quality reported from a cellular user comprises:

    calculating, by the base station, the minimum power enhancement value according to a principle that current signal quality reported from the D2D user and current signal quality reported from the cellular user are both higher than or equal to preset signal quality.

**5.** The method according to claim 1, before the determining, by a base station, a minimum power enhancement value according to signal quality reported from a D2D user and signal quality reported from a cellular user, the method further comprising:

> detecting, by the base station, whether the signal quality which is reported from the cellular user is lower than preset signal quality; and receiving the signal quality which is reported from the D2D user when the signal quality which is reported from the cellular user is lower than the preset signal quality.

**6.** The method according to claim 1, wherein the signal quality comprises at least one of following information:

> Signal to Interference plus Noise Ratio (SINR), error rate, block error rate, and hybrid automatic repeat request (HARQ) feedback information.

**7.** A base station, comprising:

> a first determination module, configured to determine a minimum power enhancement value according to signal quality reported from a D2D user and signal quality reported from a cellular user;
> a judgment module, configured to judge whether the minimum power enhancement value is smaller than a power headroom PH value which is reported from the cellular user; and
> a first control module, configured to control power of the cellular user according to the minimum power enhancement value when the minimum power enhancement value is smaller than the PH value which is reported from the cellular user.

**8.** The base station according to claim 7, further comprising:

> a second determination module, configured to determine a power back-off value according to the minimum power enhancement value when the minimum power enhancement value is smaller than the PH value which is reported from the cellular user; and
> a second control module, configured to enable the base station to control power of the D2D user according to the power back-off value.

**9.** The base station according to claim 7 or 8, wherein the first determination module determines the minimum power enhancement value in a manner of:

> calculating the minimum power enhancement value according to a principle that current signal quality reported from the D2D user and current signal quality reported from the cellular user are both higher than or equal to preset signal quality.

**10.** The base station according to claim 7, further comprising:

> a detection module, configured to detect whether the signal quality which is reported from the cellular user is lower than preset signal quality; and
> a receiving module, configured to receive the signal quality which is reported from the D2D user when the signal quality which is reported from the cellular user is lower than the preset signal quality.

Fig.1

```
┌─────────────────────────────────┐
│ A base station determines a      │
│ minimum power enhancement value  │
│ of a cellular user according to  │        S102
│ the signal quality which is      │
│ respectively reported from a     │
│ D2D user and the cellular user   │
└─────────────────────────────────┘
                 │
                 ▼
┌─────────────────────────────────┐
│ The base station judges if the   │
│ minimum power enhancement value  │        S104
│ is smaller than a power headroom │
│ PH value which is reported from  │
│ the cellular user                │
└─────────────────────────────────┘
                 │
                 ▼
┌─────────────────────────────────┐
│ The base station controls the    │
│ power of the cellular user       │        S106
│ according to the minimum power   │
│ enhancement value                │
└─────────────────────────────────┘
```

Fig.2

```
┌─────────────────────┐
│ First determination  │
│ module 10            │
└─────────────────────┘
           │
┌─────────────────────┐
│ Judgment module 20   │
└─────────────────────┘
           │
┌─────────────────────┐
│ First control module │
│ 30                   │
└─────────────────────┘
```

Fig.3

```
┌─────────────────────┐      ┌─────────────────────┐
│ First determination  │──────│ Second determination │
│ module 10            │      │ module 40            │
└─────────────────────┘      └─────────────────────┘
           │                            │
┌─────────────────────┐      ┌─────────────────────┐
│ Judgment module 20   │      │ Second control       │
└─────────────────────┘      │ module 50            │
           │                 └─────────────────────┘
┌─────────────────────┐
│ First control module │
│ 30                   │
└─────────────────────┘
```

Fig.4

```
┌─────────────────────────────┐
│   Detection module 60       │
└─────────────────────────────┘
              │
┌─────────────────────────────┐
│   Receiving module 70       │
└─────────────────────────────┘
              │
┌─────────────────────────────┐
│   First determination       │
│   module 10                 │
└─────────────────────────────┘
              │
┌─────────────────────────────┐
│   Judgment module 20        │
└─────────────────────────────┘
              │
┌─────────────────────────────┐
│   First control module      │
│   30                        │
└─────────────────────────────┘
```

Fig.5

← → Useful signal
← - - - - → Interference signal

Fig.6

```
                    ┌──────────────────────┐
                    ▼                      │
              ╱──────────╲                 │
            ╱   Does the   ╲ ___ S602       │
           ╱  SINR exceed a  ╲──────────────┘
           ╲    limit?      ╱      NO
            ╲              ╱
              ╲──────────╱
                  │
                 YES
                  ▼
    ┌────────────────────────────────┐
    │ Receive an instant SINR which is│___ S604
    │ reported from a D2D user and a  │
    │ preset SINR_D0, the cellular    │
    │ user equipment reports a PH     │
    │ value to the base station       │
    └────────────────────────────────┘
                  │
                  ▼
    ┌────────────────────────────────┐
    │ The base station determines a   │___ S606
    │ minimum power enhancement value │
    │ according to the contents which │
    │ are reported from the D2D user  │
    │ and the cellular user           │
    └────────────────────────────────┘
                  │
                  ▼
          ╱──────────────╲  ___ S608
        ╱  Is The power    ╲
      ╱  enhancement value  ╲
     ╱  smaller than the PH   ╲
     ╲  value which is reported╱
      ╲  from the cellular user╱
        ╲      ?             ╱
          ╲──────────────╱
       YES  │              │  NO
            ▼              ▼
      ___ S610          ___ S614
```

Receive an instant SINR which is reported from a D2D user and a preset SINR$_{D0}$, the cellular user equipment reports a PH value to the base station — S604

The base station determines a minimum power enhancement value according to the contents which are reported from the D2D user and the cellular user — S606

Is The power enhancement value smaller than the PH value which is reported from the cellular user ? — S608

Calculate a power back-off value of D2D when the minimum power enhancement value of the cellular user is applied — S610

Cancel the D2D communication and the D2D user switches to a cellular communication — S614

The base station controls the power back-off of the D2D user, the power enhancement of the cellular user via a power control protocol — S612

11

Fig.7

```
                                                    S702
                    ╱────────────────────────╲
                   ╱       Does the current    ╲
                   ╲   SINR exceed a preset SINRcₒ? ╱      NO
                    ╲────────────────────────╱
                             │
                            YES
                             ▼
        ┌──────────────────────────────────────┐
        │ A D2D user reports an instant SINRd and a │    S704
        │ preset SINRD0, the cellular user equipment │
        │ reports a PH value to the base station     │
        └──────────────────────────────────────┘
                             │
                             ▼
        ┌──────────────────────────────────────┐
        │ Calculate a minimum power enhancement  │
        │ value according to the principle of ensuring the │  S706
        │ SINR of the cellular users and the SINR of the │
        │ D2D communication are both higher than the │
        │            preset SINR                 │
        └──────────────────────────────────────┘
                             │
                             ▼
                    ╱────────────────────────╲  S708
                   ╱         Is the power       ╲
                  ╱  enhancement value smaller than the ╲
                  ╲  PH value which is reported from the ╱
                   ╲        cellular user?       ╱
          YES       ╲────────────────────────╱    NO
```

| S710 | S714 |
|---|---|
| Calculate a power back-off value of D2D when the minimum power enhancement value of the cellular user is applied | Cancel the D2D communication and the D2D user switches to become a cellular user |

The base station controls the power back-off of the D2D user, the power enhancement of the cellular user via a power control protocol          S712

<table>
<tr><td colspan="2" align="center"><strong>INTERNATIONAL SEARCH REPORT</strong></td><td>International application No.<br>PCT/CN2013/079094</td></tr>
</table>

**A.   CLASSIFICATION OF SUBJECT MATTER**

H04W 52/04 (2009.01) i

According to International Patent Classification (IPC) or to both national classification and IPC

**B.   FIELDS SEARCHED**

Minimum documentation searched (classification system followed by classification symbols)

IPC: H04W; H04L; H04B

Documentation searched other than minimum documentation to the extent that such documents are included in the fields searched

Electronic data base consulted during the international search (name of data base and, where practicable, search terms used)

WPI, EPODOC, CNPAT, CNKI: D2D, power, increas+, reduc+, headroom, remain+, allowance, SINR, BER, HARQ

**C.   DOCUMENTS CONSIDERED TO BE RELEVANT**

| Category* | Citation of document, with indication, where appropriate, of the relevant passages | Relevant to claim No. |
|---|---|---|
| X | CN 101711054 A (BEIJING NORTHERN FIBERHOME TECHNOLOGIES) 19 May 2010 (19.05.2010) description, paragraphs [0004], [0035] and [0065]-[0079] | 1-10 |
| A | WO 2011069295 A1 (NOKIA CORPORATION) 16 June 2011 (16.06.2011) the whole document | 1-10 |
| A | WO 2011160284 A1 (ZTE CORPORATION) 29 December 2011 (29.12.2011) the whole document | 1-10 |

☐ Further documents are listed in the continuation of Box C.          ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 18 September 2013 (18.09.2013) | 17 October 2013 (17.10.2013) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Puxin<br><br>Telephone No. (86-10) 62413350 |

Form PCT/ISA/210 (second sheet) (July 2009)

## INTERNATIONAL SEARCH REPORT
Information on patent family members

| International application No. |
|---|
| PCT/CN2013/079094 |

| Patent Documents referred in the Report | Publication Date | Patent Family | Publication Date |
|---|---|---|---|
| CN 101711054 A | 19.05.2010 | None | |
| WO 2011069295 A1 | 16.06.2011 | US 2012243431 A1 | 27.09.2012 |
| | | EP 2510733 A1 | 17.10.2012 |
| | | CN 102792745 A | 21.11.2012 |
| WO 2011160284 A1 | 29.12.2011 | None | |

Form PCT/ISA /210 (patent family annex) (July 2009)